# EUROPEAN PATENT APPLICATION

(11) **EP 0 954 991 A1**
(43) Date of publication of application: **10.11.1999**
(21) Application number: 97930860.8
(22) Date of filing: 17.07.1997
(51) Int. Cl.: A23P 1/16, A23P 1/14, A23G 3/02

(54) **DOUGH FOR CAKES CONTAINING AIR BUBBLES ENTRAINED THEREINTO; AND PROCESS AND EQUIPMENT FOR THE PRODUCTION OF THE SAME**

(30) Priority: 23.07.1996 JP 21298996
(71) Applicant: Kankyou Kagaku Kougyou Kabushiki Kaisha, Nagoya-shi, Aichi 462 (JP)
(72) Inventor: NIIMI, Tomio, Kita-ku, Nagoya-shi, Aichi 462 (JP)
(74) Representative: Goddar, Heinz J., Dr.
(86) International application number: JP9702525
(87) International publication number: WO9803089

(57) **Abstract**

A whipping action necessary to generate foams is uniformly carried out in a short time, and the foaming properties is improved by decreasing physical damage, whereby it becomes possible to produce good quality cakes. Forward-open small chambers formed on two disks are caused to communicate with each other. Using a whipping apparatus 5 secured in a casing, liquid eggs in a tank 2 and gas coming from a gas feeding source 3 are compressed, fed into and passed through the whipping apparatus 5, thereby giving a whipping action to the fluids.

## Description

### TECHNICAL FIELD

The present invention relates to whipped ingredients for cake utilizing the foaming properties of eggs, and method and apparatus for producing the same.

### BACKGROUND ART

Conventionally, as a method for producing sponge cake, angel cake, and/or meringue cake, etc., which are softly swelled like a sponge, utilizing the foaming properties of eggs, among various types of cakes, three kinds of whipping methods have been commonly known, they are a simultaneous whipping method, a separate whipping method, and an all-in mix method (all-ingredient preparation method). In any one of the methods, as a treating method for impregnating foam in ingredients, a whipping process is included, in which various ingredients such as sugar, salt, wheat flour, milk etc., are blended with the deutoplasm, the albumen, or the entire egg at a ratio according to the kinds of cake, etc., and a wire whipper is rotated by a mechanical drive source to cause them to be agitated, wherein foams are impregnated therein.

However, the whipping process is carried out in an atmospheric air state. That is, no measure is taken against microorganisms, and an intensive shearing force operates on the protein of the albumen, deutoplasm and entire egg, wherein there are shortcomings and problems, by which the protein is subjected to physical damage, the protein may be denatured, and subsequently, the foam property may deteriorate to make the quantity of foam insufficient. Therefore, good quality cakes can not be obtained. Furthermore, there is still another shortcoming, in which since, if the abovementioned physical damage is intensive, the ingredients are liquidized and they do not impregnate any foam, it is unavoidable to agitate the ingredients at a low speed, and productivity is suppressed.

Still furthermore, it is very difficult to control the overrun, which is the capacity of increasing quantity, resulting from impregnation of foam since the ingredients are agitated by a wire whipper in an atmospheric air state, and the diameters of the foam impregnated in the ingredients are not made uniform.

The invention provides whipped ingredients for cake, in which inconvenience can be eliminated in producing foams, the foams are minute and can be maintained in a uniform state, and a method and apparatus for producing the same, wherein uniform whipping operations necessary to produce foams can be carried out in a short time, the foam property can be increased with physical damage suppressed, whipped ingredients can be continuously produced in a microbe-free state while maintaining a state where good quality cakes can be produced, it becomes easy to control overrun, feasibility of novel cakes is created, a down-sizing of a whipping apparatus is enabled, and the assembling thereof is made simple.

### DISCLOSURE OF INVENTION

In view of various types of shortcomings related to control of microorganisms, excessive physical damage, control of overrun, etc., based on the conventional arts described above, the present invention employs a whipping apparatus in which forward-open small chambers formed on two disks are caused to communicate with each other and are provided in a casing, wherein, by causing eggs and gas being fluid to be fed in a compressed state and to pass through the whipping apparatus, a whipping action consisting of collision, separation, confluence, meandering, vortex flow, etc., is uniformly given to the fluid in a short time in order to improve the foaming properties, to increase the overrun being the capacity of increasing quantity and to enable control of the overrun and microorganisms, whereby the invention provides whipped ingredients for cake, and provides a method and an apparatus for producing the same. Thereby, the abovementioned shortcomings and problems can be solved.

Furthermore, the abovementioned producing method is enabled by using a whipping apparatus, in which a cylindrical casing having an inlet and an outlet and two disks having a number of forward-open small chambers provided on confronting sides facing each other are made into a set, a plurality of elements which consist of the abovementioned set concentrically overlapping each other are provided, the outer diametrical side of one of the abovementioned disks is made liquid-tight in relation to the inner circumferential surface of the casing, a communicating hole is prepared at the center thereof, a circulating path is formed at the outer diametrical side of the other disk, small chambers of one disk and those of the other disk are arrayed with their positions slid so that the respective small chambers are caused to communicate with the other small chambers confronting each other, these elements are arrayed in the casing so as to overlap each other so that the disks of the same direction are made adjacent to each other, and one disk is arranged at both the sides so that the inlet, outlet and circulating path are caused to communicate with each other. A process in which eggs and gas are caused to pass therethrough in a compressed state is included in such a whipping apparatus when producing cakes.

Furthermore, in view of dietary hygiene and storage, preferably, gas is sterilized and is changed into purified gas. Thereafter, the purified gas is caused to pass through the whipping apparatus together with the eggs.

Furthermore, a production apparatus consists of a tank, a gas feeding means, a whipping apparatus, and a compressed feeding device, wherein the tank accommodates eggs, and the gas feeding source is provided with a flow regulating feature for gas.

The whipping apparatus is constructed so that a cylindrical casing having an inlet and an outlet and two disks having a number of forward-open small chambers provided on the confronting sides facing each other are made into a set, a plurality of elements which consist of the abovementioned set concentrically overlapping each another are provided, the outer diametrical side of one of the abovementioned disks is made liquid-tight in relation to the inner circumferential surface of the casing, a communicating hole is prepared at the center thereof, a circulating path is formed at the outer diametrical side of the other disk, small chambers of one disk and those of the other disk are arrayed with their positions slid so that the respective small chambers are caused to communicate with the other small chambers confronting each other, these elements are arrayed in the casing so as to overlap each other so that the disks of the same direction are made adjacent to each other, and one disk is arranged at both sides so that the inlet, outlet and circulating path are caused to communicate with each other, whereby eggs in the tank and gas supplied by the gas feeding source are forcibly sent into the whipping apparatus by a compressed feeding means.

Furthermore, another whipping apparatus is such that a cylindrical body is made of a resilient material and has such an outer diameter as can be inserted into the casing, a frame portion is integrally formed inwardly of both sides of the cylindrical body to form an annular sealing body, one disk, which is formed with a greater outer diameter than the inner circumferential diameter of the frame portion at the annular sealing body, is arranged at both sides in the annular sealing body, the two other disks are arrayed therebetween, a circulating path is formed at the outer diametrical side of the other disks to an element assembly, an appointed number of the element assemblies are arranged in the casing, and are held by covering members between both ends of the casing so that the respective frame portions of the annular sealing body in the element assemblies are resiliently deformed.

Furthermore, still another whipping apparatus is such that a packing body is provided so as to press the entire outer surface of the frame portions of the annular sealing body in the element assemblies arranged in an appointed number in the casing when a covering member is attached thereto, and a packing body having a communicating hole formed at the center thereof is provided in a gap portion inward of the frame portion of the annular sealing body in the element assemblies arranged in an appointed number in the casing and on the outer surface of the frame portions of the annular sealing body, wherein the packing body and frame portions are resiliently deformed when a covering member is attached.

Further another whipping apparatus is such that a columnar projecting portion to be inserted into the casing is provided, a seal seating portion which is made semi-split groove-like is formed at the circumferential edge side at the tip end of the columnar projecting portion, the outer diameter of one disk is formed to such a degree that the disk is not brought into contact with the inner circumferential surface of the casing, a seal seating portion which is made semi-split groove-like is formed at the circumferential edge side of the rear side on which small chambers are not formed, sealing members are provided in the sealing grooves formed by adjacent seal seating portions, the seal seating portion which is the bottom of the sealing groove is made tapered, and if necessary, a purifying means which sterilizes gas and changes it into purified gas is provided.

### BRIEF DESCRIPTION OF DRAWINGS

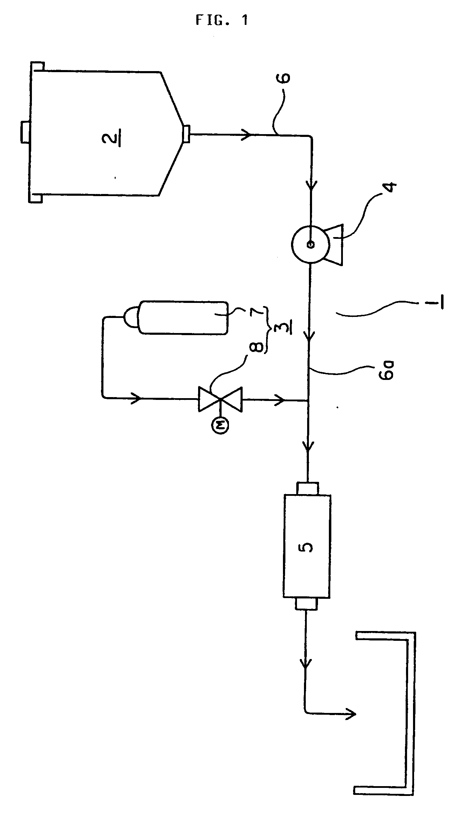

FIG.1 is a sketch showing the outline of construction of an apparatus for producing whipped ingredients for cake according to the invention,
FIG.2 is a rough sectional view of a whipping apparatus for fixing the same producing apparatus,
FIG.3 is a front elevational view of two disks which constitute an element of the same whipping apparatus,
FIG.4 is a perspective view of the upper disk,
FIG.5 is a view showing a state where respective small chambers are arranged so as to communicate with each other in a case where two upper disks are caused to concentrically overlap each other,
FIG.6 is a view showing a state where small chambers in the same disks are arranged so as to communicate with each other in a case where the profile of the small chambers are made triangle,
FIG.7 is a view showing a state where small chambers in the same disks are arranged so as to communicate with each other in a case where the profile of the small chambers is made square,
FIG.8 is a view showing a state where small chambers in the same disks are arranged so as to communicate with each other in a case where the profile of the small chambers is made octangle,

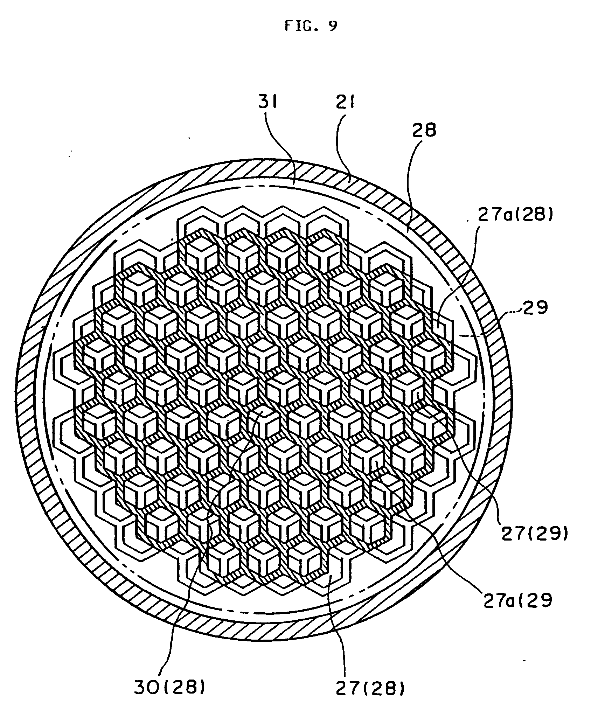

FIG.9 is a rough sectional view taken along the line A-A in FIG.2,
FIG.10 is a rough sectional view shoving another preferred embodiment of the same whipping apparatus,
FIG.11 is a sectional view showing a state before a covering member is attached onto the whipping apparatus,
FIG.12 is a disassembled perspective view of an element assembly which constitutes the same whipping apparatus,
FIG.13 is a rough sectional view showing still another preferred embodiment of the whipping apparatus,
FIG.14 is a sectional view showing a state before a covering member is attached onto the same whipping apparatus,
FIG.15 is a disassembled perspective view of an element assembly which constitutes the same whipping apparatus,
FIG.16 is a rough sectional view showing another preferred embodiment of the whipping apparatus,
FIG.17 is a sectional view showing a state before a covering member is attached onto the same whipping apparatus,
FIG.18 is a disassembled perspective view of an element assembly which constitutes the same whipping apparatus,
FIG.19 is a rough sectional view showing still another preferred embodiment of the whipping apparatus,
FIG.20 is a sectional view showing a state before a covering member is attached onto the same whipping apparatus,
FIG.21 is a disassembled perspective view of an element assembly which constitutes the same whipping apparatus,
FIG.22 is a rough sectional view showing still another preferred embodiment of the whipping apparatus,
FIG.23 is a front elevational view of two disks which constitute an element in the same whipping apparatus,
FIG.24 is a side elevational view of the same two disks,
FIG.25 is a front perspective view of the same two disks,
FIG.26 is a rear perspective view of one of the same two disks,
FIG.27 is a rough sectional view taken along the line C-C in FIG.23,
FIG.28 is a rough sectional view taken along the line D-D in FIG.23,
FIG.29 is a disassembled perspective view of the element,
FIG.30 is a perspective view of the element,
FIG.31 is a front elevational view showing another preferred embodiment of the same two disks, and
FIG.32 is a partially enlarged sectional view shoving an attached state of a sealing member into a sealing groove consisting of a tapered plane.

### BEST MODE FOR CARRYING OUT THE INVENTION

A description is given of the preferred embodiments of the invention with reference to the accompanying drawings.

An apparatus 1 for producing whipped ingredients for cake according to the invention is provided with a tank 2 which accommodates a solution, in which ingredients such as sugar, salt, wheat flour, milk, etc., are blended with a liquid phase content such as the deutoplasm, the albumen, or the entire egg at a mixing ratio according to the type of cakes, etc., a gas feeding source 3 having a flow regulating feature of a gas phase content such as gas, carbonic acid gas, nitrogen gas (inactive gas), etc., a pump 4 for feeding a liquid phase content in the tank 2 in a compressed state, and a whipping apparatus 5 for whipping or foaming two-phased constituents consisting of gas and liquid by causing them to pass therethrough.

It is preferable that the tank 2 is constructed so as to be completely enclosed so that the liquid phase contents accommodated therein are not brought into contact with the atmospheric air in order to prevent the quality and freshness of the solution from being lowered due to contamination resulting from microorganisms in the atmosphere. The suction side of the pump 4 which acts as a compressed feeding means of the liquid is connected to the tank 2 by a tubular means 6, and the inlet side of the whipping apparatus 5 is connected to the discharge side of the pump 4 via a tubular means 6a.

Furthermore, the gas feeding source 3 which acts as a fluid compressed feeding means may be such that gas is compressed and fed by a blower (not illustrated) or a compressor (not illustrated), or gas is made into compressed gas, filled in a cylinder 7, and fed in a compressed state. Such a gas feeding source 3 is connected to a tubular member 6a between the discharge side of the pump 4 and the inlet side of the whipping apparatus 5.

Furthermore, a flow regulating valve 8 may be provided to provide the gas feeding source 3 with a flow regulating feature.

Furthermore, in order to eliminate microorganisms or offensive smell constituents in gas such as air, carbonic acid gas, nitrogen gas (inactive gas), etc., which is a gas phase content, many means are available without limitation, which are a general sterilizing or microbe eliminating filter, an adsorption method utilizing a porosity of adsorbent (for example, active charcoal, active clay, silica gel, etc.), and ozone oxidizing method utilizing the oxidizing force of ozone, etc.

Next, a first preferred embodiment of the whipping apparatus 5 is such that flanges 22 and 22a each protruding in the outer circumferential direction are formed at an opening at both ends of a cylindrical casing 21, plate-like covering members 25 and 25a having an inlet 23 and an outlet 24, the diameters of which are smaller than the inner diameter of the casing 21, formed at the center thereof, are detachably attached to the end face of the flanges 22 and 22a.

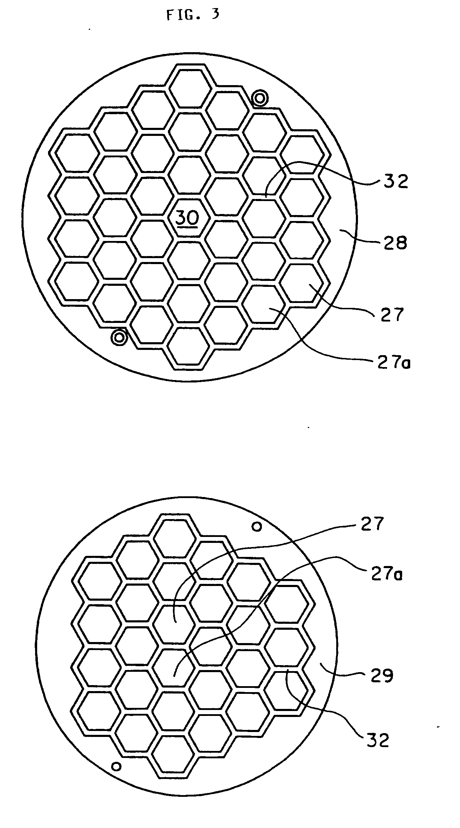

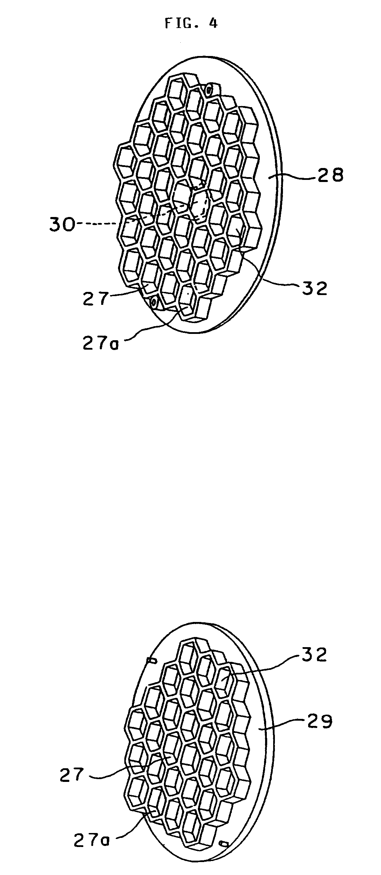

Elements 26 are arrayed in a plurality in the axis center direction inside the hollow portion of the casing 21, and such elements 26 consist of a large disk 28 and a small disk 29 as a set, wherein as shown in FIG.3 through FIG.5, a number of cylindrical small chambers 27, 27a, etc., having their side walls 32 orthogonal to the corresponding front side, which are open to the front and the plan view of which is polygonal, are arrayed on the front side confronting each other, and these disks are caused to concentrically overlap each other.

Furthermore, the outer diametrical side of one disk 28 which is made larger is formed to such a size that the outer diameter thereof is brought into contact with the inner circumferential surface of the casing 21 so that a liquid-tight state can be secured between the outer diametrical side of the disk 28 and the inner circumferential surface of the casing 21 in order to seal a fluid therebetween. On the other hand, the outer diametrical side of the other disk 29 which is made smaller is formed to such a size that a circulating path 31 can be formed between the outer diametrical side and the inner circumferential surface of the casing 21 with space secured therebetween.

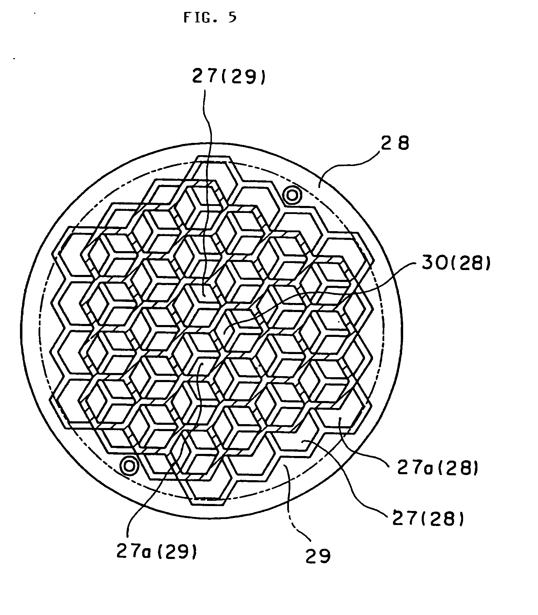

Furthermore, as shown in FIG.5, small chambers 27, 27a, etc., of one disk 28 and those of the other disk 29 are arrayed with their positions slid so that they are caused to communicate with small chambers 27, 27a, etc., which respectively confront each other.

Subsequently, these elements 26 are caused to overlap so that the disks of the same direction (in the order of the set of disks 28 or the other set of disk 29) are made adjacent to each other and serially arranged in the hollow portion of the casing 21.

Furthermore, a one disk 28 is arranged at both sides of elements 26 in a serially connected state, wherein the communicating hole 30, inlet 23 and outlet 24 of the one disk 28 are caused to communicate with each other.

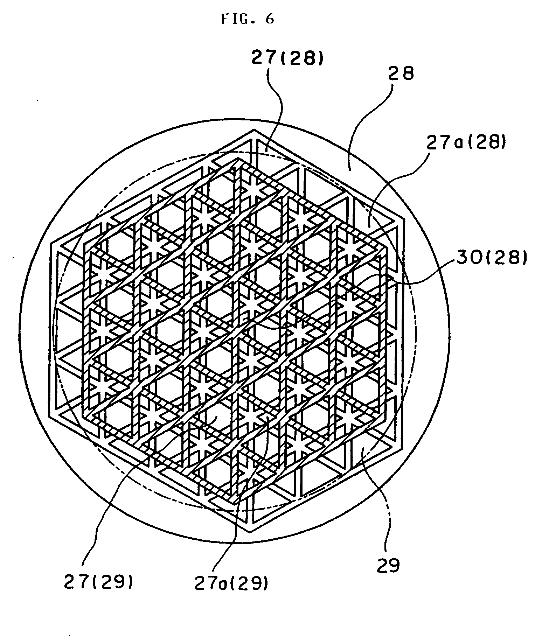

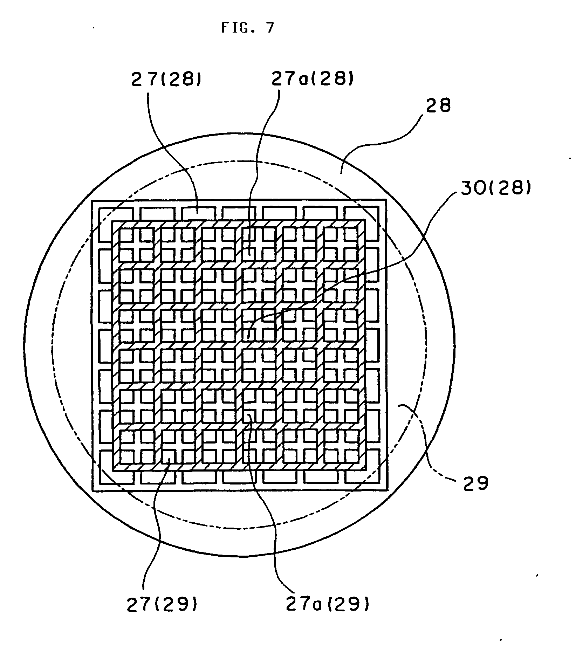

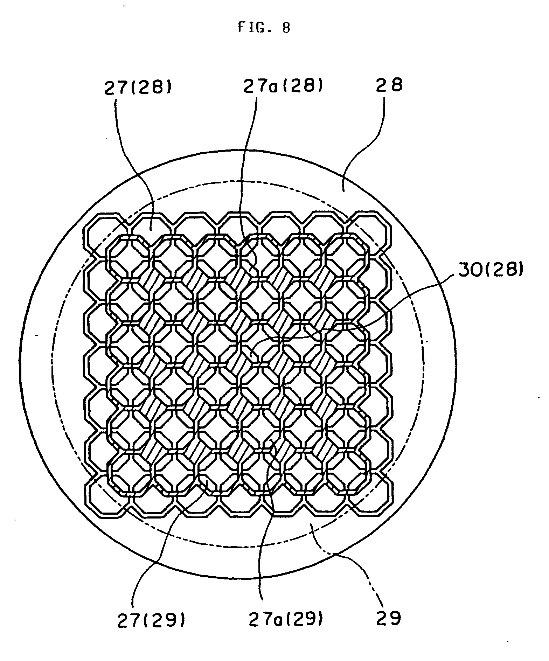

Furthermore, in the abovementioned embodiment, the plan view of the small chambers 27, 27a, etc., is made hexagonal, and a number of small chambers 27, 27a, etc., are arranged like a honeycomb. The plan view thereof is not limited to such a honeycomb arrangement. As shown in FIG.6 through FIG.8, the plan view of the small chambers, 27, 27a, etc., may be made triangle, square, octangle, etc., or may be made circular (not illustrated).

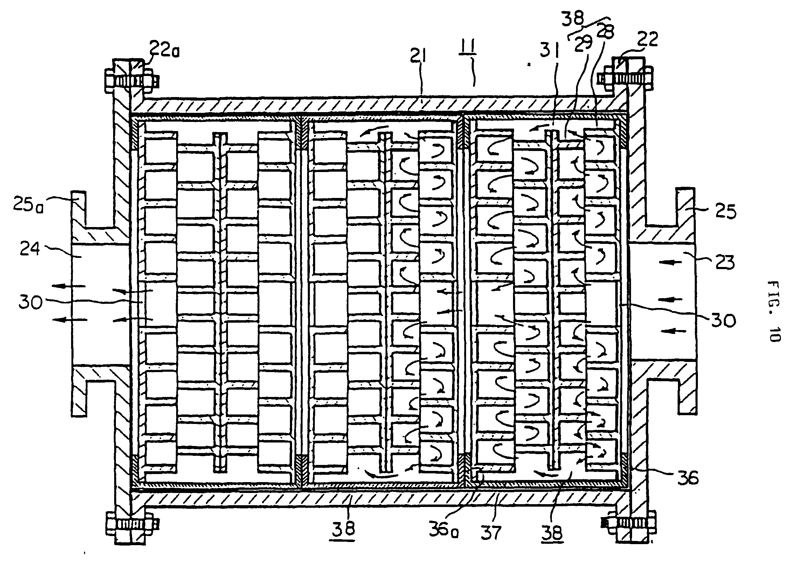

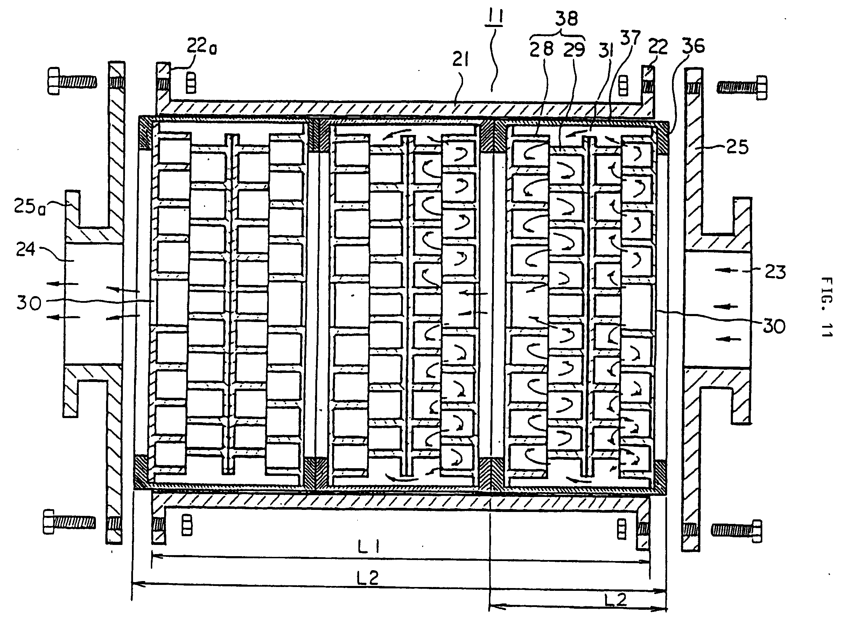

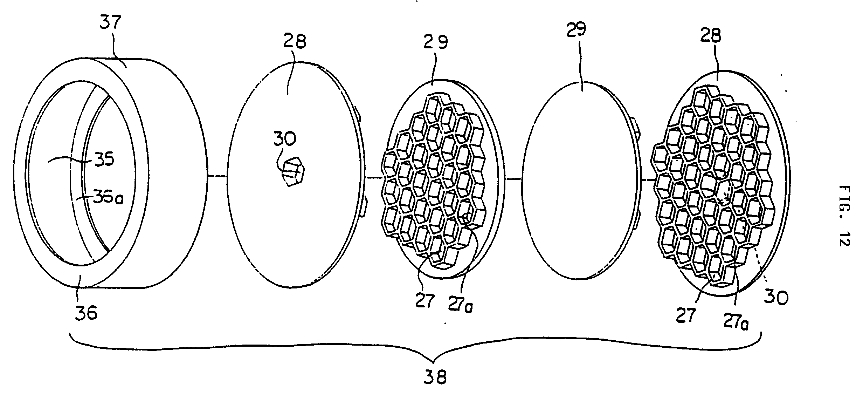

Next, a second preferred embodiment of the whipping apparatus 5 is, as shown in FIG.10 through FIG.12, such that a cylindrical body 35 is formed of a rubber resilient body (nitric rubber, silicone rubber, fluorine rubber, acrylic rubber, etc.), which is a material used for an enclosing device, with such an outer diameter that the cylindrical body 35 is idly fitted with a slight spacing with respect to the inner circumferential surface of the casing 21, and frame portions 36 and 36a are integrally formed inwardly of both ends of the cylindrical body 35 to make annular sealing body 37.

Furthermore, The length of the cylindrical body 35 of the annular sealing body 37 in the axial direction is made roughly coincident with the length of small and large small disks 28 and 29 concentrically overlapped in quadruplicate in the axial direction.

Furthermore, a one disk 28 is formed so as to be brought into contact with the inner circumferential surface of the cylindrical body 35 of the annular sealing body 37 or have a slightly smaller diameter than the inner circumference of the cylindrical body 35 thereof, but have a greater diameter than the inner circumferential diameter of the frame portions 36 and 36a, or the outer diametrical side of the other disk 29 is made to such a size that the outer diameter thereof is spaced from the inner circumference of the cylindrical body 35 and a circulating path 31 is formed between the outer circumference of the disk 29 and the inner circumference of the cylindrical body 35.

Subsequently, the one disk 28 is arranged at both sides, and the other disks 29 are disposed therebetween so that respective small chambers 27, 27a, etc., of the one disk 28 are caused to face those of the other disks 29 and are caused to communicate with each other with their positions slid, wherein two sets of elements each consisting of two disks 28 and 29 are arrayed in the hollow portion of the annular sealing body 37, thereby forming an element assembly 38.

Next, a plurality of element assemblies 38 are disposed in a series in the hollow portion of the casing 21 and are fixed by tightening bolts with the covering members 25 and 25a applied to the end face of the flanges 22 and 22a, whereby the plurality of element assemblies 38 are held and fixed between the covering members 25 and 25a, and are disposed in the casing 21.

Herein, where a dimension L2 between both ends of the consolidated element assemblies 38 concentrically and continuously arrayed in a plurality in a free state with the frame portions 36 and 36a of the respective annular sealing bodies 37 contacted is made greater than a dimension L1 between both ends of the casing 21, a pressing force is applied to the respective frame portions 36 and 36a of the annular sealing bodies 37 in each of the element assemblies. Therefore, since the respective flanges 36 and 36a are resiliently deformed by the pressing force, the upper end faces of the side wall 32 of the small chambers 27, 27a, etc., are pressed to each other by the resilient righting force to improve the contact state, and the frame portions 36 and 36a of the annular sealing bodies 37 are pressed to the rear side of the other disk 29, thereby improving the contact state.

Furthermore, the abovementioned preferred embodiment is in a case where the element assemblies 38 are provided in a plurality. However, in a case where the element assembly 38 is singular, the dimension L2 between both ends of the element assembly 38 may be made greater than the dimension L1 between both ends of the casing 21. Furthermore, as in the third preferred embodiment described later, wherein a covering member a columnar protruding portion 50 which is idly inserted into an opening portion at both ends of the casing 21 is used instead of the covering members 25 and 25a, their dimensions are not limited to the relationship between the dimensions L1 and L2. That is, when a plurality of element assemblies are held between the covering members 25 and 25a at both ends, the thickness of the frame portions 36 and 36a is established so that the respective frame portions 36 and 36a are resiliently deformed and a resilient righting force is produced.

Furthermore, in the abovementioned preferred embodiment, since there may be a case where the sealing portion at the rear side of one disk 28 is the outer circumferential side with which the frame portions 36 and 36a of the annular sealing body 37 is brought into contact, and the inner circumferential edge side of the frame portions 36 and 36a is not pressed due to a dimension error of the inner circumferential diameter of the frame portions 36 and 36a contacted with each other, the frame portions 36 and 36a may be swelled if the fluid supplying pressure is increased, thereby causing the sealing thereat to be lost. In order to avoid such poor sealing, it is preferable that the embodiment is constructed as described below.

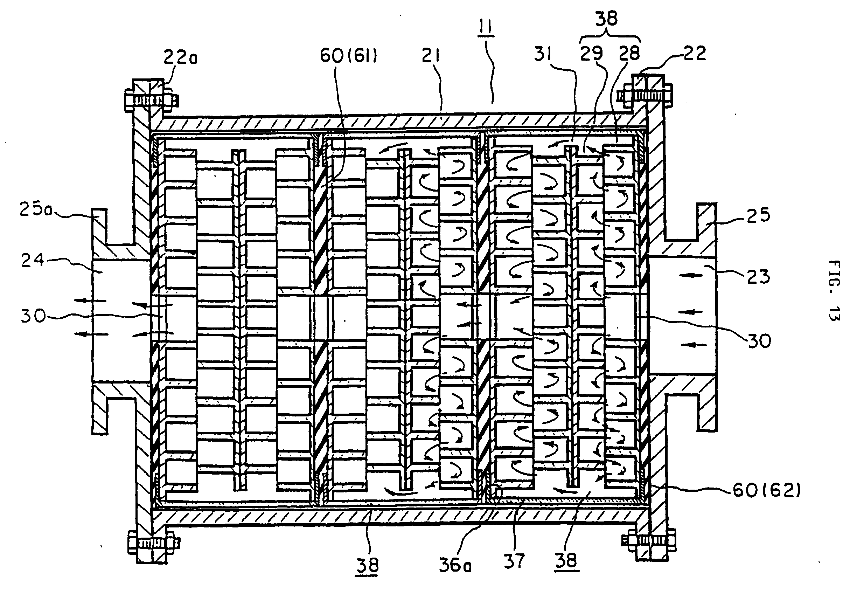

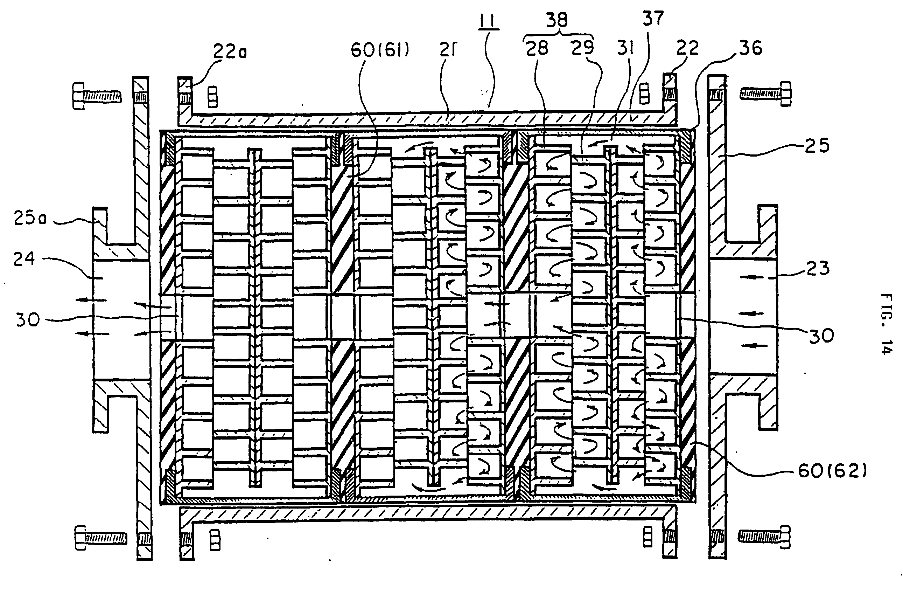

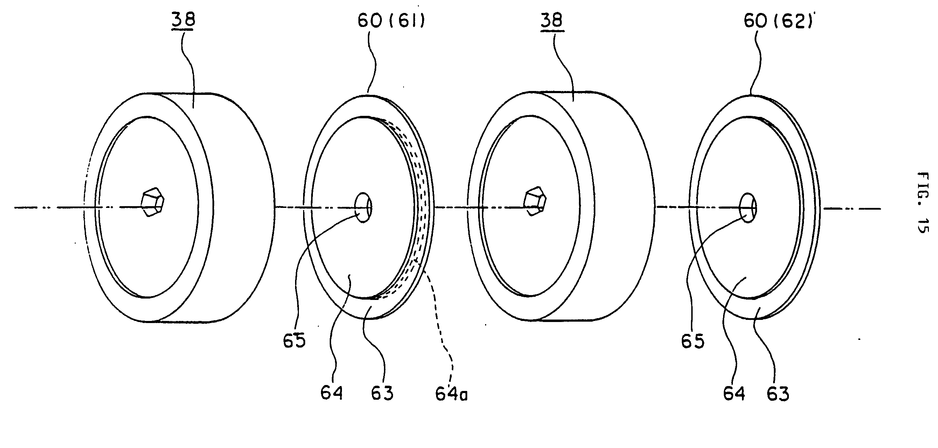

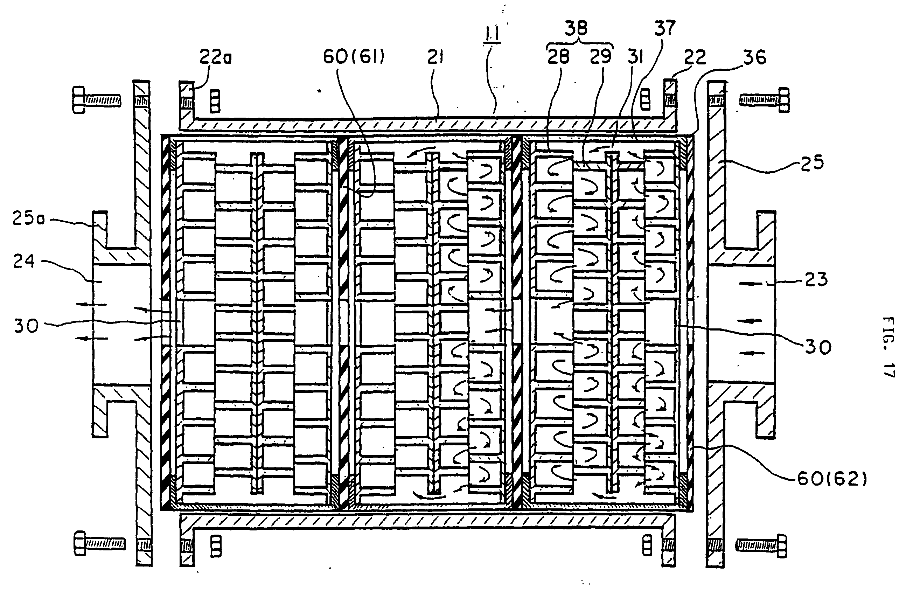

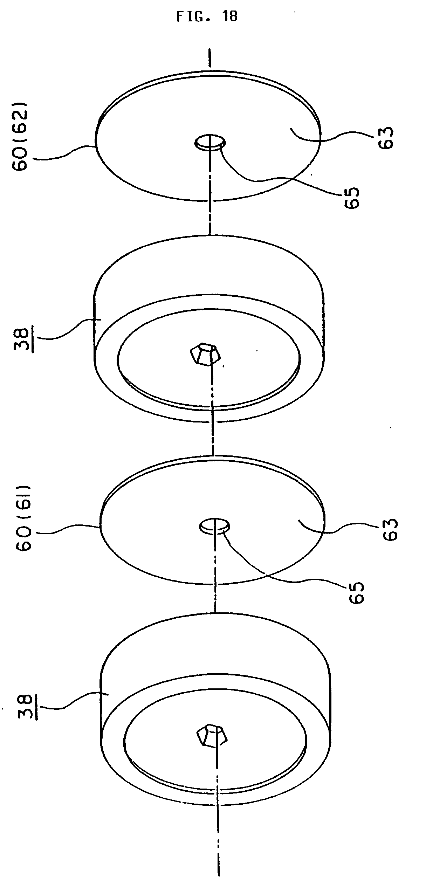

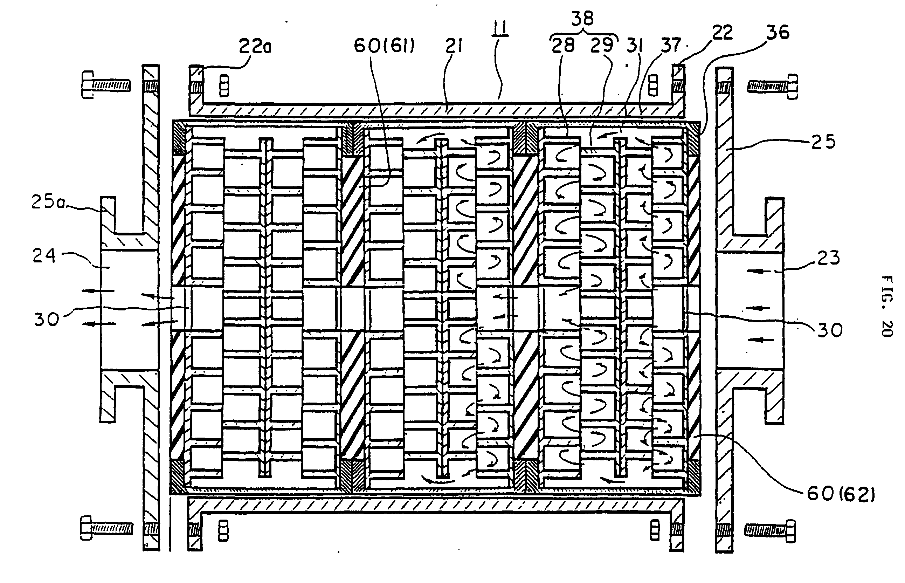

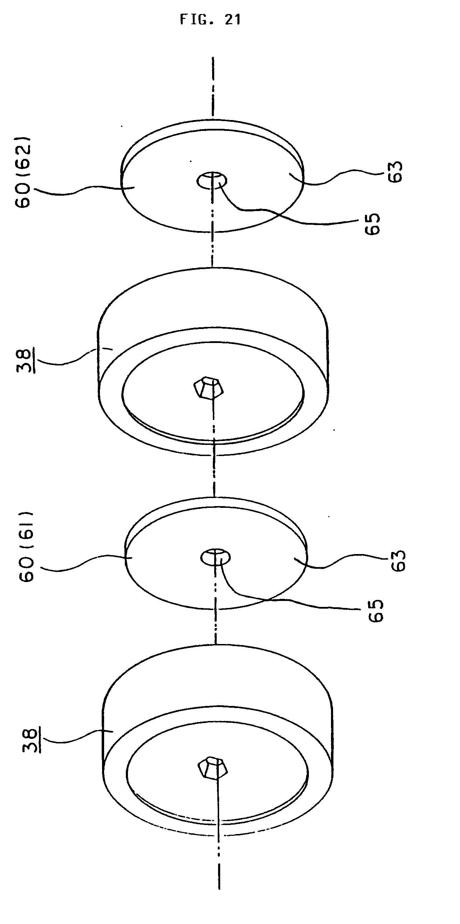

First, as shown in FIG.13 through FIG.21, when the frame portions 36 and 36a of the annular sealing body 37 in an element assembly 38 internally attached to the casing 21 are made into those provided with a packing 60 which presses the entire outer surface of the frame portions 36 and 36a when the element assembly 38 is held between the covering members 25 and 25a at both sides, wherein two types of the packing 60 are provided, one of which is an intermediate packing 61 which is secured between the element assemblies 38, and the other of which is an end packing 62 which is secured between each of the element assemblies 38 and the covering members 25 and 25a.

The material of the packing 60 may be a rubber resilient body such as an annular sealing body 37, or such that at least only the respective frame portions 36 and 36a are resiliently deformed without substantially resiliently deforming the packing 60 when the element assemblies 38 are held between the covering members 25 and 25a at both sides.

Furthermore, as shown in FIG.13 through FIG.15, the intermediate packing 61 is constructed so that columnar portion 64 and 64a having a slightly smaller diameter than the inner diameter of the frame portions 36 and 36a of the annular sealing body 37 is formed so as to protrude from and at both sides of a disk body 63 which has a greater diameter than the inner diameter of the frame portions 36 and 36a of the annular sealing body 37 and has a smaller diameter than the inner diameter of the casing 21, and at the same time, the columnar portion 64 has a communicating hole 65 formed at the center thereof, which has roughly the same diameter as that of the communicating hole 30 formed at the center of one disk 28.

Furthermore, the end packing 62 is, as shown in FIG.13 through FIG.15, constructed so that any one of the columnar portions 64 and 64a of the intermediate packing 61 is not formed, or the intermediate packing 61 is formed by causing the disk body 63 of the end packing 62 to be overlapped with each other.

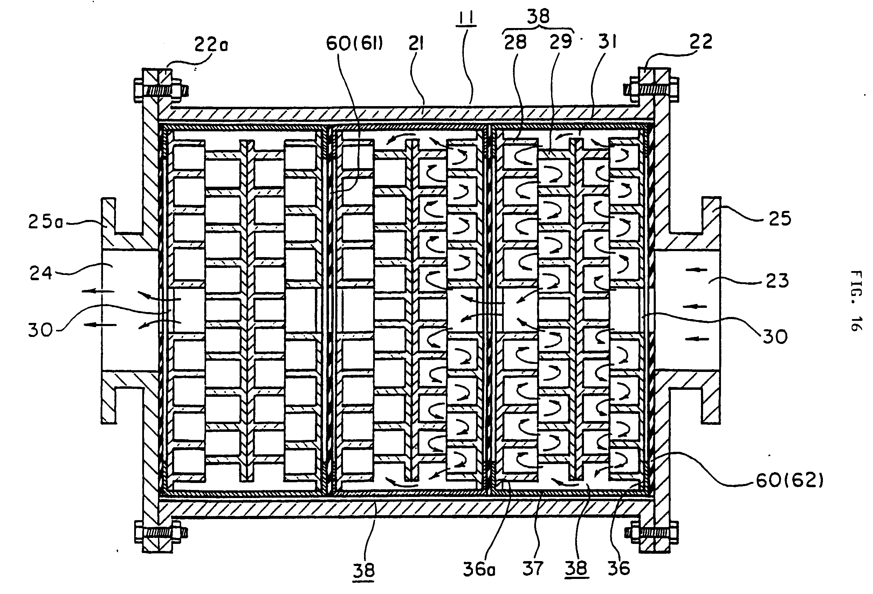

Furthermore, as shown in FIG.16 through FIG.18, those in which the columnar portions 64 and 64a in the abovementioned preferred embodiment is not formed may be used as an intermediate packing 61 and an end packing 62.

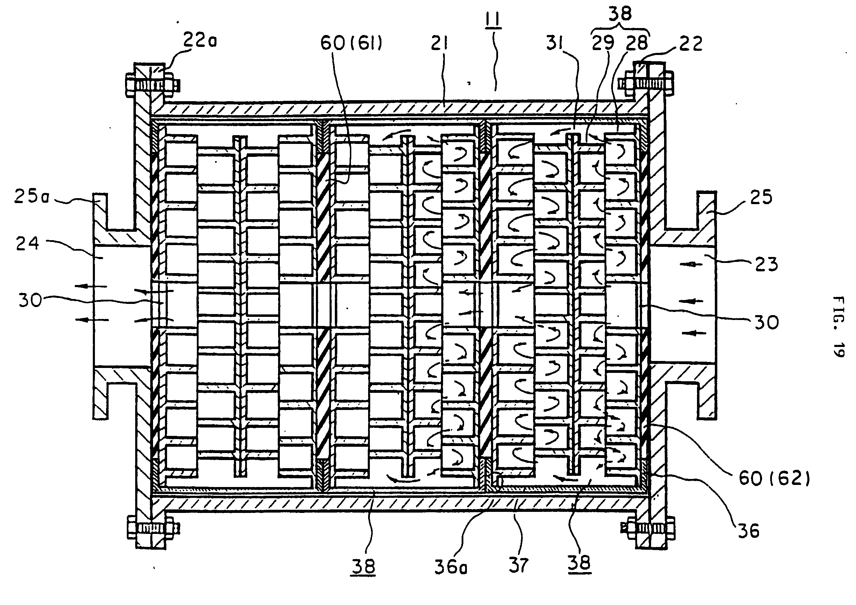

Furthermore, in the abovementioned preferred embodiment, although the intermediate packing 61 and end packing 62 are shaped so as to have a portion held between the frame portions 36a and 36a of element assemblies 38, as shown in FIG.19 through FIG.21, in a case where only the exposed portion (inwardly of the frame portions 36 and 36a) at the rear side of the one disk 28 is sealed, those, in which a communicating hole 65 is formed at the center of the disk body 63 having a slightly smaller diameter than the inner diameter of the frame portions 36 and 36a of the annular sealing body 37, may be used as an intermediate packing 61 or an end packing 62.

Also in the abovementioned preferred embodiment, when an element assembly 38 is held by the covering members 25 and 25a at both sides, the respective frame portions 36 and 36a are resiliently deformed, wherein the respective thickness of the frame portions 36 and 36a, intermediate packing 61 and end packing 62 is established so that, by the resilient righting force thereof, the rear side of the large-diametered disk 28 is completely adhered so as to be made liquid-tight.

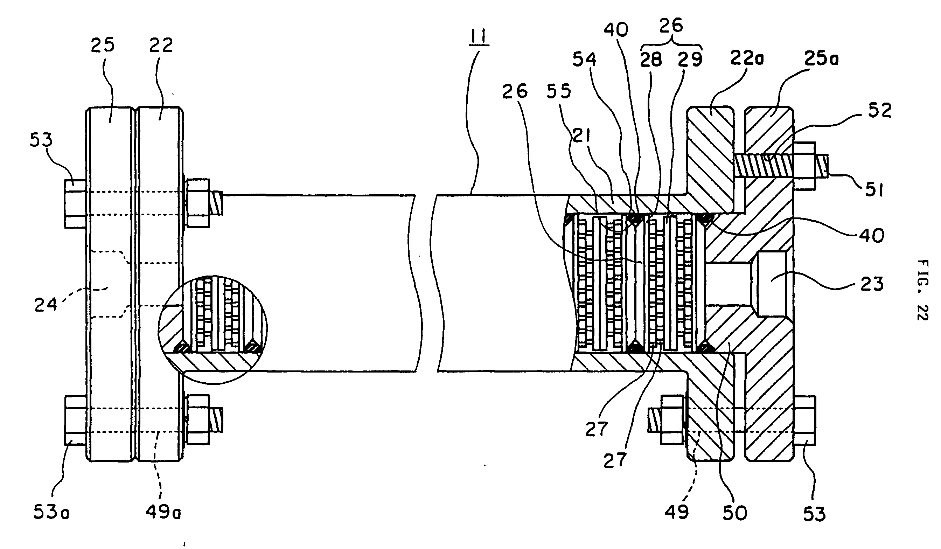

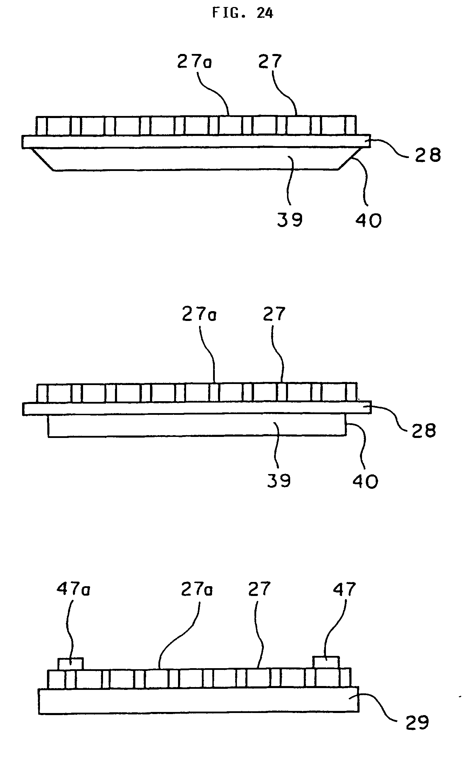

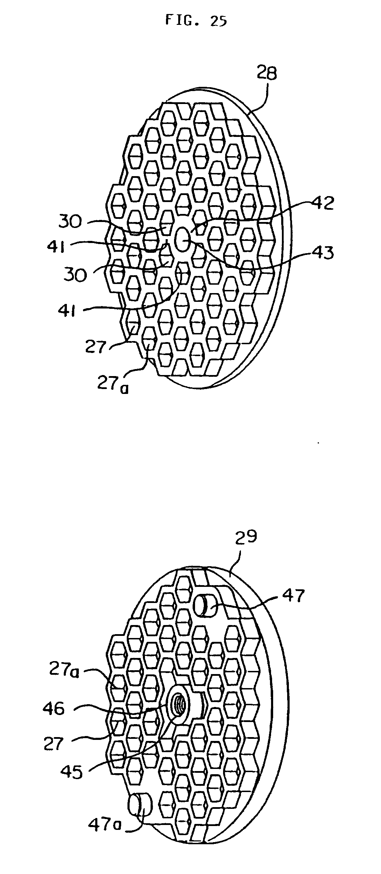

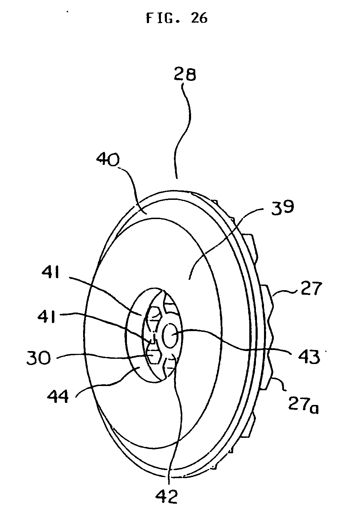

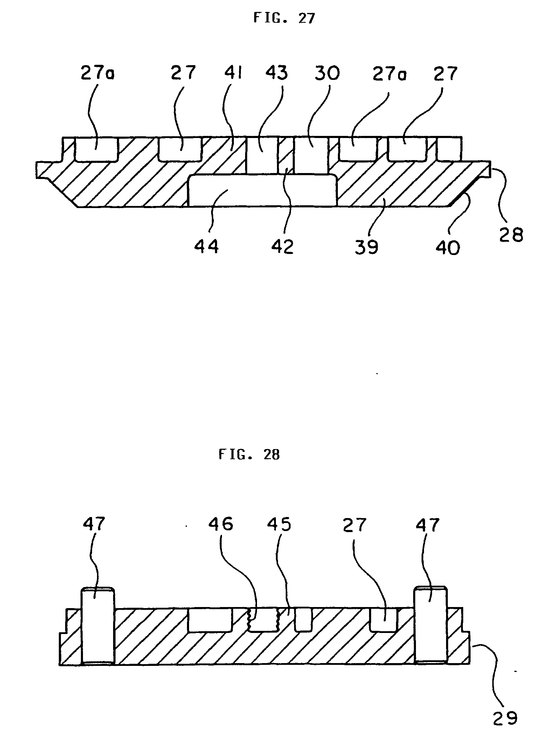

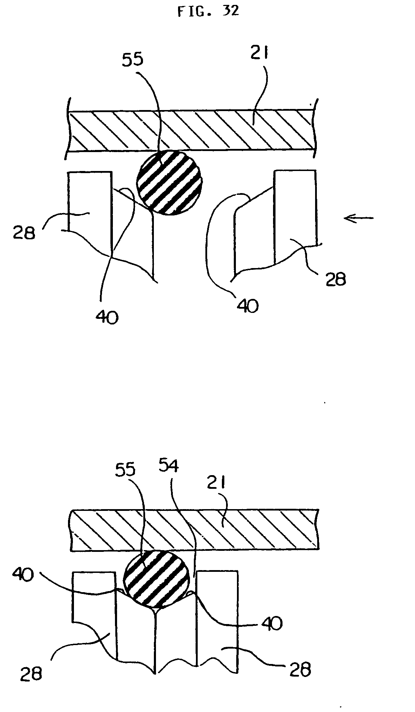

Next, a third preferred embodiment of the whipping apparatus 5 is such that, as shown in FIG.22 through FIG.32, the outer diameter of one disk 28 in the first preferred embodiment is formed to such a degree that it is not adhered (idly fitted) to the inner circumferential surface of the casing 21, and at the same time a flat coniform trapezoidal platform 39 having a slightly smaller bottom diameter than the outer diameter of the disk 28 is integrally formed on the flat rear side not having any small chambers formed 27, 27a, etc., wherein the circumferential side of the disk 28, which is outside the platform 39, is made recessed, thereby forming a seal seating plane 40.

The seal seating plane 40 is made semi-split groove-like in order to shape a sealing groove 54 described below, and a part thereof is formed by an area formed so as to be tapered, wherein the tapered portion is made into a seat, in the sealing groove 54, where a sealing member 55 is pressed to and is brought into contact with the sealing groove 54.

Furthermore, another embodiment of the seal seating plane 40 may be such that the platform 39 is constructed to be flat and columnar and is made semi-split groove-like by an area recessed by the outer circumferential surface of the platform 39 and the circumferential edge side on the rear side of the disk 28.

Furthermore, a hub 42 is integrally formed at the tip end of an arm 41 oriented from the inner surface of the communicating hole 30 toward the center thereof at the center of the communicating hole 30 passing through the center of the one disk 28, wherein an axial opening 43 is formed at the center of the hub 42, and a spot faced portion 44 recessed an appointed depth on the platform 39 around the communicating hole 30 is formed.

Next, a columnar boss 45 is caused to protrude at the center of the front side of the other disk 29 where a number of small chambers 27, 27a, etc., are formed, wherein a female screw opening 46 is provided at the center of the boss 45, and at the same time fitting pins 47 and 47a which are engaged with optional small chambers 27, 27a, etc., at the extremely outer side on the one disk 28 are provided at the outside of the same front side.

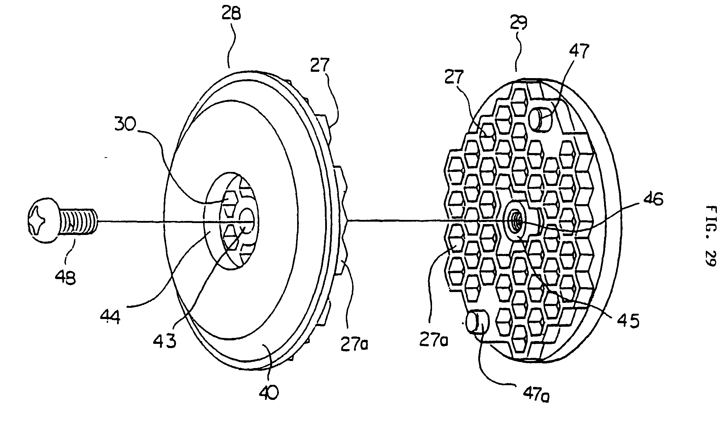

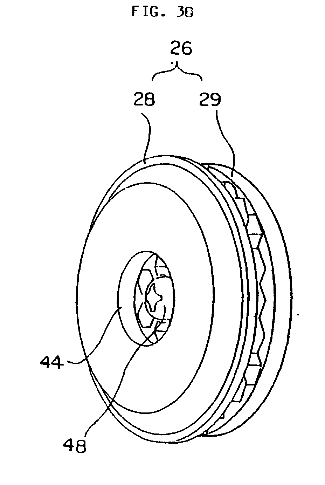

Subsequently, as shown in FIG.29 and FIG.30, the small chambers 27, 27a, etc., secured on the front side are caused to overlap the other small chambers 27, 27a, etc., opposed thereto with their positions slid so that they can communicate with each other. Thereafter, a set screw 48 is provided in the axial opening 43 and is screwed into the female screw opening 46, whereby the two disks 28 and 29 are connected to each other, thereby forming an element 26.

Furthermore, bolt insertion holes 49, 49a, etc., are formed at the flanges 22 and 22a of the casing 21, a columnar protruding portion 50 which is idly inserted into the opening at both ends of the casing 21 is provided at the covering members 25 and 25a, respectively, forming an inlet 23 and an outlet 24, which are attached to both sides of the casing 21, and a seal seating plane 40 is formed which is similar to the abovementioned two disks 28 and 29 is formed at the circumferential edge side at the tip end of the columnar protruding portion 50, wherein an appointed number of through screw holes 52, into which adjustment bolts 51 are screwed, are formed at points opposed to the flanges 22 and 23.

Elements 26 in which two disks 28 and 29 are connected to each other by set screws 48 in a series in the hollow portion of the opening of the casing 21 are arrayed so that the same type of disks 28 or 29 are made adjacent to each other, and in a state where the columnar protruding portion 50 is inserted into the opening at both ends of the casing 21, the covering members 25 and 25a are attached by an appointed number of connection bolts 53 and 53a, wherein a roughly V-shaped or U-shaped sealing groove 54 is shaped by the seal seating planes 40 formed on one disk 28 in the adjacent elements 26.

A ring-like sealing member 55 which has an appointed collapsing allowance by such a sealing groove 54 and the inner circumferential surface of the casing 21 is attached into the sealing groove 54, thereby causing a whipping apparatus 5 to be obtained.

Herein, as regards an attaching method of the sealing member 54, first, the covering member 25 is attached to one opening of the casing 21 by an appointed number of connection bolts 53 and 53a. Thereafter, sealing members 55 and elements 26 are arrayed in a plurality in a series in this order, and finally another covering member 25a is attached to the other opening of the casing 21 by an appointed number of connection bolts 53 and 53a, wherein a sealing member 55 is attached in the sealing groove 54 shaped by the adjacent seal seating planes 40.

Furthermore, an O-ring, an X-ring, a D-ring, etc., are available as a shape for a sealing member 55. Furthermore, the material thereof may be nitric rubber, silicone rubber, fluorine rubber, acrylic rubber, etc., which is a rubber resilient body.

Next, a description is given of the method for producing whipped ingredients for cake by a producing apparatus according to the invention.

Ingredients such as sugar, salt, wheat flour, milk, etc., are blended with the deutoplasm, the albumen, or the entire egg, which are accommodated in a tank 2, at a blending ratio according to the kinds of cake, etc., and are made into a solution, wherein the solution is compressed and fed into a whipping apparatus 5 by a pump 4, and an appointed quantity of gas is compressed and is supplied into the solution from a gas feeding source 3. Herein, a whipping action is given to the solution in a process where the solution and gas pass through the whipping apparatus 5, gas is uniformly foamed in a minute state and is impregnated by the solution, wherein whipped ingredient solution is continuously discharged.

Furthermore, by removing microorganisms and offensive smells in the gas in advance, it is possible to produce whipped ingredients in a microbe-free state, whereby, the dietary hygiene and preservation properties can be improved, and the original taste of the ingredients is not spoiled.

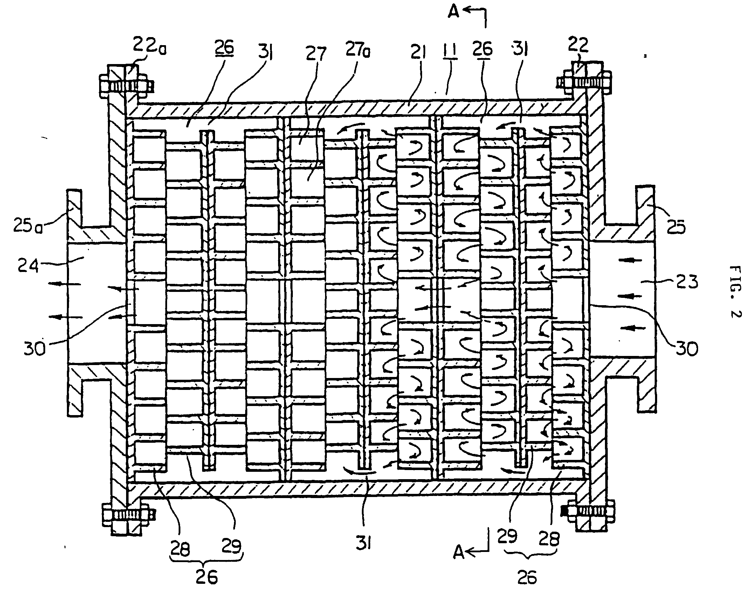

A description is given of the foaming mechanism by a whipping action in the whipping apparatus 5 described above. As a fluid consisting of a liquid-phase content being a solution and a gas-phase content being gas are compressed and fed from the inlet 23 of the whipping apparatus 5 into the interior space of the casing 21, the fluid reaches inside through a communicating hole 30 of the upstream side element 26 as shown by the arrows shown in, for example, FIG.2, the straight flow thereof is interrupted by the other disk 29, and the flow direction is changed, wherein the fluid passes through small chambers 27, 27a, etc., communicating with each other and radially flows from the center toward the circumference of the casing while being subjected to various combinations of right-angle collisions, separation, confluence, meandering and vortex flows, etc.

As described above, the fluid passing through the upstream side element 26 and reaching the inner circumferential surface of the casing 21 enters the respective small chambers 27, 27a, etc., of the downstream side element 26 from a circulating path 31 formed by the inner circumferential surface of the casing 21 and the other disk 29, is collected at the center while being uniformly subjected to various combinations of right-angle collisions, separation, confluence, meandering and vortex flows, etc., as in the above. Then, again the fluid enters another downstream side element 26 from the communicating hole 30, and again the fluid flows in the interior of the element 26 from the center toward the outside passing through the respective small chambers 27, 27a, etc., while being uniformly subjected to various combinations of right-angle collisions, separation, confluence, meandering and vortex flows, etc. By such circulation, gas is impregnated in the fluid, and the fluid is minutely foamed and goes out through the outlet 24.

Furthermore, as regards the fluid (or solution), as described above, an effective whipping action is carried out by right-angle collisions to the bottom or side walls 32 of the respective small chambers 27, 27a, etc., separation from the respective small chambers 27, 27a, etc., to a plurality of the other small chambers 27, 27a, etc., confluence and meandering from a plurality of small chambers 27, 27a, etc., to any one of the small chambers 27, 27a, etc., vortex flows resulting from inflows from a plurality of small chambers 27, 27a, etc., to any one of the small chambers 27, 27a, etc., hydrodynamic shearing when passing through an orifice being a circulating path from the respective small chambers 27, 27a, etc., to any one of the small chambers 27, 27a, etc., crushing resulting from breakage due to impacts, and shearing occurring when passing the upper ends of the side wall 32, etc.

Herein, the total number of times of separation resulting from the elements 26 is determined by the number of small chambers 27, 27a, etc., on the two large and small disks 28 and 29, which are radially arrayed from the center thereon. For example, if the small chambers are arrayed in hexagons in view of the plan view shown in FIG.5, the total number of times of separation is several thousands when one fluid is handled in the case of an element 26, composed of a disk 28 consisting of three rows of chambers each being six chambers, twelve chambers and eighteen chambers (total thirty-six chambers) and a disk 29 composed of three rows of chambers each being three chambers, nine chambers and fifteen chambers (total twenty-seven chambers), which is caused to overlap each other, and in a case where the fluids are two or more, the total number thereof reaches a product of the multiplication.

Furthermore, the abovementioned number of times of separation means the number of times of separating a fluid, which is produced by small chambers 27, 27a, etc., each communicating with each other on the disks 28 and 29, while the fluid passes through the element 26. In a case where the number of elements 26 is plural, the total number of times of separation will be the product of the respective number of times of separation of elements 26, and the number may be varied by increasing or decreasing the number of rows of small chambers 27, 27a, etc. In a whipping apparatus 5 using an element assembly 38, right-angle collisions, separation, confluence, meandering, vortex flow, etc., are repeated as in the above.

Furthermore, as regards a whipping apparatus 5 in which the element assembly 38 is arrayed, the whipping action is carried out as in the above, and since the dimension L2 between both ends of an element assembly 38 is established to be greater than the dimension L1 between both ends of the casing 21, and the covering members 25 and 25a are attached to both sides of the casing 21 to hold and fix the element assembly 38 therebetween, it is possible to tightly maintain the contacted state at the upper end face of the side walls 32 which forms small chambers 27, 27a, etc., on the disks 28 and 29. Since the frame portions 36 and 36a of the annular sealing body 37 are closely adhered to the outer circumferential side of the rear side of one disk 28 so as to be resiliently deformed, a sealing function is given to such places, whereby it is possible to regulate leakage from the rear side of one disk 28 into the annular sealing body 37 and leakage from the closely adhered points of the respective frame portions 36 and 36a into the space between the outer circumferential surface of the annular sealing body 37 and the inner circumferential surface of the casing 21.

Furthermore, in the preferred embodiment in which an intermediate packing 61 and an end packing 62 are provided as a packing 60 attached to only the exposed portion (inward of the frame portions 36 and 36a) of the rear side of one disk 28, and since the intermediate packing 61 and end packing 62 are, respectively, provided so as to be resiliently deformed in a space in the area from the surrounding of the communicating hole 30 at the rear side of one disk 28 to the portion sealed by the frame portions 36 and 36a of the annular sealing body 37, a sealing function is given to such positions.

Furthermore, in an embodiment in which an intermediate packing 61 and an end packing 62 are provided as a packing 60 consisting of only a disk 63, the entire area of the frame portions 36 and 36a at such positions is completely and resiliently deformed even in a case where the inner circumferential edge of the frame portions 36 and 36a is not pressed due to a dimension error of the inner diameter of the frame portions 36 and 36a which are closely adhered to each other. Therefore, the sealing property of the outer circumferential side of the rear side of one disk 28 can be improved.

Furthermore, as regards an embodiment in which an intermediate packing 61 and an end packing 62 are provided at the disk 63 as a packing 60 which forms columnar portions 64 and 64a, since the intermediate packing 61 and end packing 62 are provided, so as to be resiliently deformed, in the space at an area from the surrounding of the communicating hole 30 at the rear side of one disk 28 to the portion sealed by the frame portions 36 and 36a of the annular sealing body 37, the intermediate packing 61 and end packing 62 are closely adhered to the rear side of one disk 28 at such a position, whereby a sealing function is given.

Furthermore, as regards the whipping apparatus 5 in which the sealing groove 54 is shaped by adjacent seal seating planes 40, the sealing member 55 and element 26 are only placed in the casing 21, the sealing member 55 can be attached in the sealing groove 54, and sealing is performed by the sealing member 55 so that a shortcut flow of fluid from the outer diameter of one disk 28 to the inner circumferential surface of the casing 21 can be regulated. Furthermore, in a case where the seal seating plane 40 is tapered, it is possible to prevent engagement of the sealing member 55 since the tapered surface becomes an guideway when attaching a sealing member 55 as shown in FIG.33.

Furthermore, as a fluid which is in an attempt to flow out between the end face of the columnar protruding portion 50 of the covering members 25 and 25a and the rear side of one disk 28 of the element assembly 38, and since a sealing member 55 is provided in the sealing groove 54 shaped by the seal seating plane 40 of the columnar protruding portion 50 and the seal seating plane 40 of the disk 28, it is possible to prevent the fluid from leaking from the outer circumference of the columnar protruding portion 50 toward the outside, wherein a gasket, etc., which is generally provided, is not necessary at the outer circumferential side of the columnar protruding portion 50.

Here, a description is given of the whipping apparatus 5 which is used in the preferred embodiment.

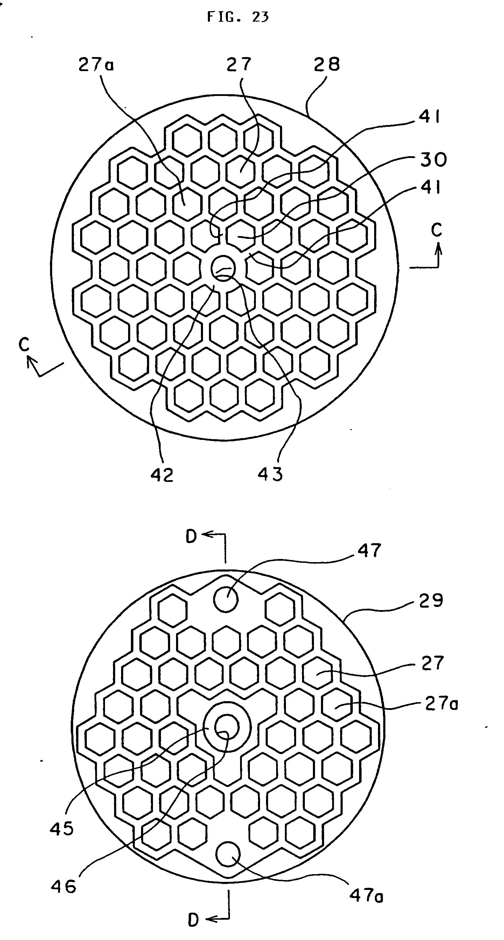

The basic pattern thereof is the third preferred embodiment. In detail, the shape of small chambers 27, 27a, etc., is hexagonal in view of its plan view. The opposite-side dimension is made approximately 3mm, and the depth is made approximately 2mm, wherein as shown in FIG.23, the number of small chambers 27, 27a, etc., of one disk 28 whose outer dimension is made approximately 36mm is set to 48 chambers, and the number of small chambers 27, 27a, etc., of the other disk 29 whose outer dimension is approximately 33.5mm, is set to 39 chambers. Twenty elements 26 in which one disk 28 and other disk 29 are connected to each other are provided in the casing 21 so that the set of disks 28 is made adjacent to each other and the other set of disks 29 is made adjacent to each other.

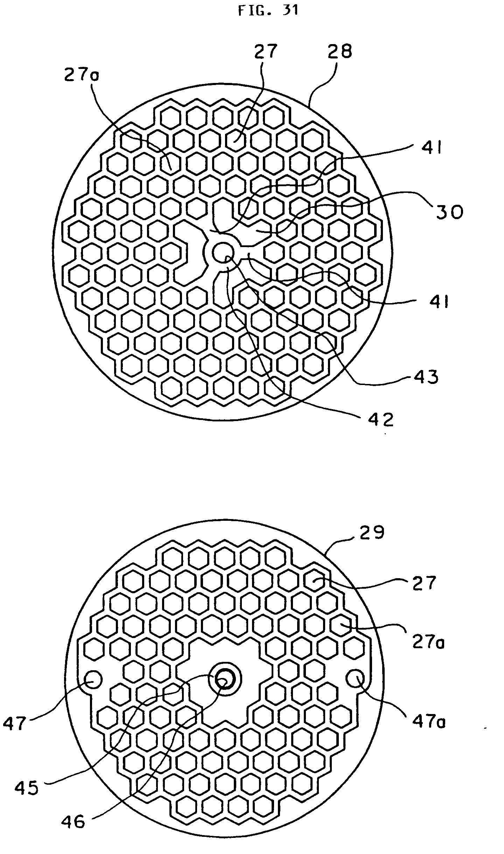

Furthermore, as shown in FIG.31, 108 small chambers 27, 27a, etc., are prepared in one disk 28 whose outer diameter is approximately 51.5mm, and 86 small chambers 27, 27a, etc., are prepared in the other disk 29 whose outer diameter is approximately 48.5mm, wherein all the others are made the same as above.

Next, it is assumed that the kind of whipped ingredients for cake is meringue, and the blending ratio of ingredients in a solution which is the material of meringue is set at "liquid albumen by 1Kg., sugar by 1Kg., dried albumen by 10 percent in weight to the liquid albumen, and lemon liquid by 2.5 percent in weight to the liquid albumen".

Furthermore, the discharge pressure of a pump 4 for compressing and feeding the solution is set to approx. 5 through 8Kgf/cm², and the discharge is set to approx. 0.151 through 0.426 liters per minute.

Furthermore, the pressure of gas (nitrogen gas) is established to be approx. 9Kgf/cm², and the flow quantity is established to be approx. 1.5 through 2.5 liters per minute, wherein the solution and gas are compressed and sent into the whipping apparatus 5, and circulated in the whipping apparatus 5 once, whereby the whipped ingredients is produced.

At this time, in order to observe the foaming properties of the abovementioned whipped ingredients, the overrun (capacity ratio) which is an increase in capacity resulting from impregnation of foams was measured. The overrun was approximately 677 through 1270% (approximately 7.73 through 13.7 times). The specific gravity was measured to be approximately 0.08 through 0.172. The period of time required from the entering of the solution and gas compressed and fed from the inlet 23 of the whipping apparatus 5 to the discharge thereof from the outlet 24 as whipped ingredients was approximately 4 through 5 seconds or less.

Furthermore, as a control, a solution of the same quantity as that of the above solution, which is produced at the same blending ratio as that of the above solution, was agitated by a conventional wire whipper for twenty-two minutes until a vertically lifted foamed condition was secured. In this case, the overrun (or the capacity ratio) was approximately 266 percent (approx. 3.66 times), and the specific gravity thereof was approximately 0.3.

As described above, with the present invention, in comparison with the conventional case, it is possible to obtain whipped ingredients having higher foaming properties. The reason is that, differing from the flowing state resulting from a strong shearing force as in the conventional example, the flowing state in the whipping apparatus 5 is constituted so that physically uniform forces are repeatedly given to a fluid by a plurality of elements 26 in a short time according to the total numbers of times of separation, which reaches astronomical figures, and the grain size of foams resulting from the gas compressed and fed into the fluid is made uniform without any unevenness (the grain size distribution is also made uniform). Moreover, it can be assumed that the grain size is made minute (several microns), and gas foams are made rigid, whereby since the protein films which support these foams are made strong, the stability of the foamed state can be much improved.

### INDUSTRIAL APPLICABILITY

In summary, when producing cakes by the foaming properties of eggs, an apparatus for producing whipped ingredients for cake according to the invention is provided with a plurality of elements 26, in which a cylindrical casing 21 having an inlet 23 and an outlet 24 and two disks 28 and 29 having a number of forward-open small chambers 27, 27a, etc., arrayed on the front sides opposed to each other are made into a set, and these disks 28 and 29 are caused to concentrically overlap each other, wherein the outer circumferential side of the abovementioned one disk 28 is made liquid-tight with respect to the inner circumferential side of the casing 21, a communicating hole 30 is prepared at the center thereof, and a circulating path 31 is formed at the outer circumferential side of the other disk 29 while small chambers 27, 27a, etc., of the one disk 28 and small chambers 27, 27a, etc., of the other disk 29 are arrayed with their positions slid so that the respective small chambers 27, 27a, etc., are caused to communicate with the small chambers 27, 27a, etc., opposed to each other. Furthermore, these elements 26 are arranged in the casing 21 so that the set of disks 28 are made adjacent to each other while the set of disks 29 are made adjacent to each other. Still furthermore, a process for carrying out a compressed feeding of eggs and gas is included in a whipping apparatus 5 one disk 28 is disposed at both sides so that the inlet 23, outlet 24 and communicating hole 30 of the casing 21 are caused to communicate with each other. Therefore, it becomes possible to continuously produce whipped ingredients having constant characteristics, productivity can be remarkably improved in comparison with the conventional cases, and the whipped ingredients according to the invention can be provided with high foaming properties and a high stability. Thereby, it becomes possible to produce good quality cakes. Furthermore, since foaming stability is high, the flow conditions (time, temperature, etc.) in a series of processes from production of whipped ingredients to the final products can be relieved, and workability can be further improved. Furthermore, since it is possible to control the overrun (or the capacity ratio) by merely regulating the pressure and/or flow quantity, it becomes possible to produce novel cakes utilizing high foaming properties, which can not be achieved by conventional methods. Still furthermore, since the flow direction of spread and confluence in the elements 26 is radial, the flow length can be increased, wherein the whipping apparatus 5 can be reduced in scale.

Furthermore, since gas is sterilized and is made into purified gas, it is possible to produce whipped ingredients in a microbe-free state, wherein dietary hygiene and preservation stability can be improved.

Furthermore, since the whipping apparatus 5 is constructed so that the covering members 25 and 25a on which an inlet 23 and an outlet 24 are formed are detachably attached at both sides of the cylindrical casing 21, a cylindrical body 35 having such an outer diameter as can be inserted into the casing 21 is formed of a resilient body, and frame portions 36 and 36a are integrally formed inwardly of both ends of the cylindrical body 35 to form an annular sealing body 37, wherein a one disk 28 which is formed with a greater outer diameter than the inner diameter of the frame portions 36 and 36a of the annular sealing body 37 is disposed at both sides of the annular sealing body 37 while two other disks 29 are disposed between the one disks 28. Since a circulating path 31 is formed at the outer diametrical side of the other disk 29 to make an element assembly 38, the element assembly 38 can be prepared unit by unit, and it is remarkably simple to assemble the whipping apparatus 5. Furthermore, since the element assemblies 38 are provided an appointed number in the casing 21, and are held between the covering members 25 and 25a at both ends of the casing 21 so that the respective frame portions 36a and 36a of the annular sealing body 37 at the element assemblies 38 are resiliently deformed, a closely adhered state at the upper end face, which form small chambers 27, 27a, etc., in the disks 28 and 29 can be securely maintained in addition to the effects by the whipping actions similar to the above description, the respective disks 28 and 29 can be prevented from unevenness, wherein any shortcut in the flow of a fluid, resulting from leakage from the upper end faces of the small chambers 27, 27a, etc., and from the outer circumferential side of the one disk 28 can be prevented from occurring, and no trouble occurs when whipping the fluid. Still furthermore, since minute grain size of the foams and uniformity thereof can be maintained, the characteristics of whipped ingredients can be further improved.

Furthermore, since a packing 60 is provided in an appointed number, which, when attaching the covering members 25 and 25a, presses the entire outer area of the frame portions 36 and 36a of the annular sealing body 37 at the element assemblies 38 arranged an appointed number in the casing 21, the entire outer area of the frame portions 36 and 36a at such positions can be resiliently deformed without fail even in a case where the inner circumferential edge of the frame portions 36 and 36a is not pressed due to a dimension error of the inner diameter of the frame portions 36 and 36a contacted with each other,. Therefore, the sealing feature of the outer circumferential side at the rear side of the one disk 28 is improved, wherein even though the pressure of compressed feeding of solution and gas is increased, no problem occurs when carrying out a whipping. Accordingly, the characteristics of whipped ingredients can be further improved as in the above example.

Furthermore, since a packing 60 having a communicating hole 65 formed at its center is provided in a space inwardly of the frame portions 36 and 36a of the annular sealing body 37 in the element assemblies 38 arranged in an appointed number in the casing 21 and on the outer surface of the frame portions 36 and 36a of the annular sealing body 37, and the packing 60 and frame portions 36 and 36a are resiliently deformed when attaching the covering members 25 and 25a. In addition to the abovementioned effects, a sealing feature can be given to the space between the surrounding of the communicating hole 30 at the rear side of the one disk 28 and the portions sealed by the frame portions 36 and 36a of the annular sealing body 37, wherein even though the pressure of carrying out a compressed feeding of solution and gas is increased, no problem occurs when whipping ingredients, the characteristics of the whipped ingredients can be further improved as in the above examples.

Furthermore, covering members 25 and 25a having an inlet 23 and an outlet 24 formed at both ends of the cylindrical casing 21 is detachably attached, and at the same time the covering members 25 and 25a are provided with a columnar protruding portion 50 which is inserted into the casing 21 while a seal seating plane 40 which is made semi-split groove-like is formed at the circumferential edge side at the tip end of the columnar protruding portion 50. The outer diameter of the one disk 28 is formed to such a size so as not to be brought into contact with the inner circumferential surface of the casing 21, and at the same time, a seal seating plane 40 which is made semi-split groove-like is formed at the circumferential edge side at the rear side on which no small chambers 27, 27a, etc., are formed, whereby a sealing member 55 is provided in a seal groove 54 shaped by the adjacent seal seating planes 40. Therefore, it is possible to shape the seal groove 54 by merely inserting and disposing the sealing member 55 and elements 26 in order into the casing 21, and at the same time, the sealing member 55 can be attached in the seal groove 54, wherein it becomes remarkably simple to assemble the whipping apparatus 5, and at the same time the sealing member 55 can be attached in the seal groove 54 without fail. Accordingly, since it becomes possible to control a shortcircuit flow of fluid from the outer circumferential side of the one disk 28, a problem such as defective separation of foams can be prevented from occurring as in the above example, and the characteristics of the whipped ingredients can be further improved. Since a sealing member 55 is attached into the seal groove 54 shaped by the seal seating plane 40 of the columnar protruding portion 50 and the seal seating plane 40 of the disk 28, it is possible to prevent a fluid from leaking from the outer circumference of the columnar protruding portion 50 to outside, wherein no gasket or the like, which is general used, is required at the outer circumferential side of the columnar protruding portion 50. Moreover, since the outer circumference of the one disk 28 is not brought into contact with the inner circumferential surface of the casing 21, it is not necessary to make precise the machining accuracy of the inner circumferential surface of the casing 21 in which a plurality of elements 26 are arrayed. Accordingly, the machining of the casing 21 itself is simplified.

Furthermore, since the seal seating plane 40 in which the bottom of the seal groove 54 is tapered, the tapered surface will function as a guide when attaching the sealing member 55, wherein a defective sealing resulting from engagement of the sealing member 55 in the casing 21, which cannot be visually observed, can be prevented from occurring.

## Claims

1. A method for producing whipped ingredients for cake, including:
a process of carrying out a compressed feeding of eggs and gas and treating said solution and eggs in a whipping apparatus when producing cakes by the foaming properties of eggs;
said whipping apparatus comprising a plurality of elements, in which a cylindrical casing having an inlet and an outlet and two disks having a number of forward-open small chambers arrayed on the front sides opposed to each other are made into a set, and said disks are caused to concentrically overlap each other,
wherein the outer circumferential side of said one disk is made liquid-tight with respect to the inner circumferential side of said casing,
a communicating hole is prepared at the center thereof,
a circulating path is formed at the outer circumferential side of the other disk while small chambers of said one disk and small chambers of said other disk are arrayed with their positions slid so that the respective small chambers are caused to communicate with the small chambers opposed to each other, said elements are arranged in said casing so that the same types of disks are made adjacent to each other while disks of the same type are made adjacent to each other, and
one disk is disposed at both sides so that said inlet, outlet and communicating hole of said casing are caused to communicate with each other.

2. A method for producing whipped ingredients for cake featured in that said gas set forth in Claim 2 is sterilized and is made into purified gas.

3. An apparatus for producing whipped ingredients for cake, comprising:
a tank for accommodating eggs,
a gas feeding source having a flow quantity regulating the feature of gas;
a cylindrical casing having an inlet and an outlet; and
a whipping apparatus consisting of a plurality of elements each constructed by concentrically overlapping a set of two disks having a number of forward-open small chambers arrayed on the front sides thereof opposed to each other,
wherein the outer circumferential side of said one disk is made liquid-tight with respect to the inner circumferential side of said casing, a communicating hole is prepared at the center thereof, a circulating path is formed at the outer circumferential side of the other disk while small chambers of said one disk and small chambers of said other disk are arrayed with their positions slid so that the respective small chambers are caused to communicate with the small chambers opposed to each other, said elements are arranged in said casing so that the same types of disks are made adjacent to each other while the same types of disks are made adjacent to each other, and one disk is disposed at both sides so that said inlet, outlet and communicating hole of said casing are caused to communicate with each other; and
further comprising a compressed feeding means for compressing and feeding said eggs and gas into said whipping apparatus.

4. An apparatus for producing whipped ingredients for cake, featured in that, in said whipping apparatus as set forth in Claim 3,
covering members having an inlet and an outlet formed at both ends of a cylindrical casing are detachably attached;
a cylindrical body is formed of a resilient material with such an outer diameter as can be inserted into the casing;
frame portions are integrally formed inwardly of both ends of said cylindrical body to form an annular sealing body;
one disk formed with a greater outer diameter than the inner diameter of said frame portions in said annular sealing body is disposed at both sides of said annular sealing body;
two other disks are arrayed between the set of disks, and at the same time a circulating path is formed at the outer circumferential side of the other disks to establish an element assembly,
said element assemblies are disposed in an appointed number in the casing; and
each of said frame portions of said annular sealing body in said element assemblies is held by said covering members at both ends of said casing so that said frame portions are resiliently deformed.

5. An apparatus for producing whipped ingredients for cake as set forth in Claim 4, wherein a packing is provided, which presses the entire area of said frame portions of said annular sealing body in said element assemblies disposed in an appointed number in said casing when attaching said covering members.

6. An apparatus for producing whipped ingredients for cake as set forth in Claim 4, wherein a packing having a communicating hole formed at the center thereof is provided in a space inwardly of said frame portions of the annular sealing body in said element assemblies disposed in an appointed number in the casing, and outside said frame portions of the annular sealing body, and said packing and frame portions are resiliently deformed when attaching the covering members.

7. An apparatus for producing whipped ingredients for cake, featured in that, in the whipping apparatus as set forth in Claim 3, covering members having an inlet and an outlet formed at both ends of the cylindrical casing are detachably attached, and a columnar protruding portion is provided in the casing;
the outer diameter of one disk is formed to such a size so as not to be brought into contact with the inner circumferential surface of the casing, and at the same time a seal seating plane which is made semi-split groove-like is formed at the circumferential edge side of the rear side on which no small chambers are formed; and
a sealing member is provided in a seal groove shaped by adjacent seal seating planes.

8. An apparatus for producing whipped ingredients for cake, featured in that, in the whipping apparatus as set forth in Claim 7, the seal seating planes being the bottom in the seal groove are tapered.

9. An apparatus for producing whipped ingredients for cake as set forth in Claim 3, 4, 5, 6, 7 or 8, further comprising:
a purifying means for sterilizing gas and making said gas into purified gas.

10. Whipped ingredients for cake, produced by a method as set forth in Claim 1 or 2.
